# EUROPÄISCHE PATENTSCHRIFT

(11) **EP 0 761 579 B1**
(45) Veröffentlichungstag und Bekanntmachung des Hinweises auf die Patenterteilung: **03.02.1999**
(21) Anmeldenummer: 96113137.2
(22) Anmeldetag: 16.08.1996
(51) Int. Cl.: B65G 69/28

(54) **Gebäude mit einer Verladestelle**
Building with a loading station
Bâtiment avec une station de chargement

(30) Priorität: 05.09.1995 DE 29514304 U
(43) Veröffentlichungstag der Anmeldung: 12.03.1997
(73) Patentinhaber: ALTEN GERÄTEBAU GMBH, D-30974 Wennigsen (DE)
(72) Erfinder: Alten, Kurt, 30967 Wennigsen (DE)
(74) Vertreter: Depmeyer, Lothar

(56) Entgegenhaltungen:
- DE-A- 3 835 055
- DE-C- 4 238 221
- DE-U- 9 316 396
- GB-A- 2 155 527
- US-A- 5 408 789

## Beschreibung

Die Erfindung betrifft ein Gebäude mit einer an einer Gebäudeöffnung befindlichen Verladestelle, wobei die Gebäudeöfffnung durch ein Sektionaltor verschliessbar ist und sich hinter dem Sektionaltor eine Überladebrücke befindet, die um eine hintere Querachse verschwenkbar und mit einer ein- und ausfahrbaren bzw. ein- und ausklappbaren Verlängerung auf der zu be- bzw. entladenden Plattform versehen ist, sowie bei geschlossenem Sektionaltor mit ihrer vorderen Kante über einen Spalt von dem Sektionaltor getrennt ist, deren Sektionen durch Scharniere mit Scharnierbolzen verbunden und seitlich durch Rollen geführt sind.

Bei den bekannten Verladestellen dieser Art muss der vorerwähnte Spalt vergleichsweise gross sein, weil die an der Innenseite der Sektionaltore befindlichen Beschläge zur Bildung der Scharniere und zur Lagerung der Führungsrollen im Abstand von der Innenfläche der Sektionaltore bzw. der sie bildenden Sektionen angeordnet sind. Diese Tatsache macht allein aus Sicherheitsgründen eine Spaltabdeckung erforderlich. Es hat daher nicht an Versuchen gefehlt, die Spaltabdeckung mit dem Schliessen des Tores automatisch herbeizuführen ( vgl. Deutsches Patent 42 38 221 ).

Der Erfindung liegt die Aufgabe zugrunde, durch eine besondere Ausbildung des Sektionaltores dafür zu sorgen, dass der vorerwähnte Spalt so klein gehalten werden kann, dass sich besondere Einrichtungen zur Spaltabdeckung erübrigen.

Zur Lösung dieser Aufgabe sind erfindungsgemäss die Scharnierbolzen für die die Sektionen verbindenden Scharniere und die Achsen für die Führungsrollen im Querschnittsbereich der Sektionen angeordnet. Demgemäss sind die Sektionen frei von nach innen in Richtung auf die Überladebrücke vorspringenden Teilen, und demgemäss kann der Spalt zwischen der Brückenvorderkante und der Innenfläche des Sektionaltores kleiner als 4o mm gehalten werden, wobei es sogar möglich ist, die Spaltbreite auf etwa 20 mm zu verringern, obwohl sowohl bei der Überladebrücke also auch bei den Sektionaltoren mit nicht unerheblichen Toleranzen gerechnet werden muss.

Dieser Vorschlag eröffnet auch die Möglichkeit, von Spaltabdeckungen ganz abzusehen. Die nunmehr erzielbaren kleinen Spaltbreiten sind nämlich ungefährlich und machen zusätzliche Sicherheitsmassnahmen überflüssig.

Es sei erwähnt, dass die für die obige Anwendung bestimmten Scharnbierbolzen gleichzeitig die Achsen für die Laufrollen bilden können.

Weitere Einzelheiten der Erfindung werden anhand der Zeichnung erläutert, in der ein Ausführungsbeispiel der Erfindung dargestellt ist. Es zeigen :
Fig. 1 einen senkrechten Schnitt durch eine Verladestelle an einem Gebäude in schematischer Darstellung,
Fig. 2 eine Teildraufsicht auf die Verladestelle gemäss Fig. 1 und
Fig. 3 einen Schnitt nach der Linie III - III von Fig. 2.

Das Gebäude z.B ein Kühlhaus hat eine Aussenwand 1 mit einer Toröffnung 2 und innen eine Fahrbahnfläche 3 z.B. für Gabelstapler. Von aussen gesehen hinter der Toröffnung 2 befindet sich eine etwa rechteckige Ausnehmung 4 zur Aufnahme einer im Grundriss praktisch gleich grossen Überladebrücke 5 die um eine hintere Querachse 5' verschwenkbar ist und am freien Ende mit einer ein- und ausfahrbaren Verlängerung 6 ( gestrichelt dargegstellt ) versehen ist, über die sich die Überladebrüpcke 5 auf der Plattform 7 eines zu be- bzw. entladenden Fahrzeuges beim Verladebetrieb abstützen kann. Zum Hochklappen der Überladebrücke dient ein Hubzylinder 8, der sich auf einer Traverse 9 abstützt. Darunter befindet sich eine isolierende Platte 10, die eine nach aussen offene Tasche 11 nach oben hin abschliesst, in die ggfs. Ladebordwände eingeführt werden können.

Die Toröffnung 2 ist durch ein innen im Gebäude 1 montiertes Sektionaltor 12 mit quer verlaufenden Sektionen 13 verschliessbar. Um das Sektionaltor 12 durch Hochziehen und Umlenken öffnen zu können, sind benachbarte Sektionen 13 scharnierartig miteinander verbunden. Die Sektionen 13 sind zu beiden Seiten in nicht dargestellten Schienen geführt. Im übrigen wird durch das Sektionaltor 12 die Ausnehmung 4 vorne verschlossen; unten liegt das Sektionaltor 12 auf der Platte 10 auf. Die Sektionen 13 liegen dabei nahe vor der vorderen Kante 14 der Überladebrücke. Der sich dabei ergebende Spalt ist mit 15 bezeichnet.

Um diesen Spalt 15 sehr klein, und zwar nur etwa 20 mm breit halten zu können, ist eine besondere Ausbildung des Sektionaltores 13 vorgesehen. Dazu ist der Scharnierbolzen 16 so angeordnet, dass er sich innerhalb des Querschnittsbereiches bzw. des Breitenbereiches der plattenförmigen Sektionen 13 befindet. Um unter diesen Voraussetzungen die Sektionen 13 im Sinne des Pfeiles 17 gegeneinander abklappen zu können, sind - wie in der Zeichnung dargestellt - besondere Profilierungen der oberen und unteren Stirnflächen der Sektionen 13 erforderlich, die jedoch beliebig ausgeführt sein können. Da das Scharnier der Sektionen 13 praktisch in diese hineinverlegt ist, entstehen keine zur Kante 14 hin vorspringenden Beschläge, die einen gewünscht kleinen Spalt 15 verhindern würden.

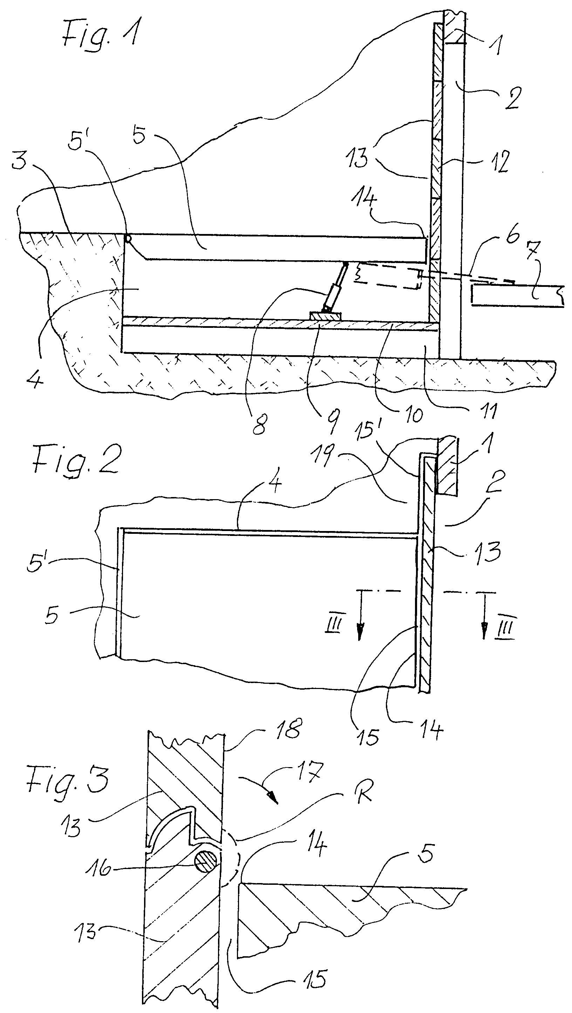

Die Scharnierbolzen 16 sind zu beiden Seiten des Sektionaltores 12 seitlich herausgeführt, um als Achse für die Führungsrollen des Tores dienen zu können; sie ragen gegenüber der Innenfläche 17 der Sektionen 13 geringfügig vor - wie in Fig. 3 bei R gestrichelt angedeutet -, jedoch verhindern sie deshalb keinen möglichst kleinen Spalt 15, weil sich die Führungsrollen und die zugehörigen Schienen zu beiden Seiten neben der Überladebrücke 5 befinden. Der Kante 14 liegen also Innenflächen 18 gegenüber, die praktisch keine nennenswerten Vorsprünge aufweisen. Deshalb kann der Spalt 15 in jedem Falle kleiner als 4o mm gehalten werden, obwohl die hier in Betracht kommenden Bauteile grosse Toleranzen aufweisen.

Wie aus Fig. 2 erkennbar ist, ist die Torbreite grösser als die Breite der Überladebrücke 5. Der sich hier zwischen der Bodenplatte 19 und den Sektionen 13 bildende Spalt 15' kann auch hier gleich oder kleiner als 40 mm, insb. nur etwa 20 mm breit sein.

Es sei noch darauf hingewiesen, dass sich die Erfindung nicht auf spezielle Scharnierausbildungen bezieht, so können die Verbindungen des Scharnierbolzens 16 mit der in Fig. 3 oben gelegenen Sektion 13 und die besondere Lagerung des Scharnierbolzens 16 in der unten dargestellten Sektion 13 beliebig ausgebildet sein.

## Patentansprüche

1. Gebäude mit einer an einer Gebäudeöffnung (2) befindlichen Verladestelle, wobei die Gebäudeöffnung (2) durch ein Sektionaltor (12) verschliessbar ist und sich hinter dem geschlosssenen Sektionaltor (12) eine Überladebrücke (5) befindet, die um eine hintere Querachse verschwenkbar und mit einer ein- und ausfahrbaren bzw. ein- und ausklappbaren Verlängerung (6) zur Abstützung auf der zu be- bzw. entladenden Plattform versehen, sowie bei geschlossenem Sektionaltor (12) mit ihrer vorderen Kante über einen Spalt (15) von dem Sektionaltor (12) getrennt ist, deren Sektionen (13) durch Scharniere mit Scharnierbolzen (16) verbunden und seitlich durch Rollen geführt sind, dadurch gekennzeichnet, dass die Scharnierbolzen (16) für die die Sektionen (13) verbindenden Scharniere bzw. die die Führungsrollen für die die Sektionen (13) aufnehmenden Achsen im Querschnittsbereich der Sektionen (13) angeordnet sind.

2. Gebäude nach Anspruch 1, dadurch gekennzeichnet, dass die Breite des Spaltes (15) gleich oder kleiner als etwa 40 mm ist.

3. Gebäude nach Anspruch 2, dadurch gekennzeichnet, dass die Breite des Spaltes (15) etwa 20 mm beträgt.

4. Gebäude nach Anspruch 2 , dadurch gekennzeichnet, dass die Breite des Spaltes (15') zwischen dem Sektionaltor (12) und der benachbarten Bodenplatte (18) des Gebäudes gleich oder kleiner ist als etwa 40 mm, insb. etwa 20 mm beträgt.

5. Gebäude nach Anspruch 1, dadurch gekennzeichent, dass die Scharnierbolzen (16) bzw. die Achsen über ihren gesamten Durchmesser hinweg innerhalb des Querschnittsbereiches angeordnet sind.

## Claims

1. Building, having a loading point situated at a building opening (2), the building opening (2) being closable by a sectional door (12), and a bridging device (5) being situated behind the closed sectional door (12), which bridging device is pivotable about a rear transverse axis and is provided with a retractable and extendable or inwardly and outwardly pivotable extension member (6) for support on the deck to be loaded or unloaded, and said bridging device is separated from the sectional door (12) with its front edge via a gap (15) when the sectional door is closed, sections (13) of said sectional door being connected by hinges provided with hinge pins (16) and being guided laterally by rollers, characterised in that the hinge pins (16) for the hinges connecting the sections (13), or respectively the guide rollers for the spindles accommodating the sections (13), are disposed in the cross-sectional region of the sections (13).

2. Building according to claim 1, characterised in that the width of the gap (15) is equal to or smaller than approximately 40 mm.

3. Building according to claim 2, characterised in that the width of the gap (15) amounts to approximately 20 mm.

4. Building according to claim 2, characterised in that the width of the gap (15') between the sectional door (12) and the adjacent base plate (18) of the building is equal to or smaller than approximately 40 mm and more especially, amounts to approximately 20 mm.

5. Building according to claim 1, characterised in that the hinge pins (16), or respectively the spindles, are disposed internally of the cross-sectional region over their entire diameter.

## Revendications

1. Bâtiment comportant une station de chargement se trouvant à une baie (2) de bâtiment, la baie (2) de bâtiment pouvant être fermée par un portail (12) à sections et un niveleur (5) de quai, qui peut basculer par rapport à un axe transversal arrière, qui est muni d'une rallonge (6) pouvant être entrée et sortie ou rabattue et déployée et qui sert à prendre appui sur la plate-forme à charger ou à décharger et qui, lorsque le portail (12) à sections est fermé, est séparé, par son bord avant, par un intervalle 15, du portail (12) à sections, lesquelles (13) sont reliées par des charnières à tiges (16) d'articulation et sont guidées latéralement par des roulettes, se trouvant derrière le portail (12) à sections fermé, caractérisé en ce que les tiges (16) d'articulation pour les charnières reliant les sections et les axes recevant les roulettes de guidage pour les sections (13) sont montés dans la région de section transversale des sections (13).

2. Bâtiment suivant la revendication 1, caractérisé en ce que la largeur de l'intervalle (15) est inférieure ou égale à environ 40 mm.

3. Bâtiment suivant la revendication 2 caractérisé en ce que la largeur de l'intervalle (12) est d'environ 20 mm.

4. Bâtiment suivant la revendication 2, caractérisé en ce que la largeur de l'intervalle (15') entre le portail (12) à sections et la plaque (18) de fond voisine du bâtiment est égale ou inférieure à environ 40 mm, notamment à environ 20 mm.

5. Bâtiment suivant la revendication 1, caractérisé en ce que les tiges (16) d'articulation et les axes sont montés sur tout leur diamètre à l'intérieur de la région de section transversale.
